# EUROPÄISCHE PATENTSCHRIFT

(11) **EP 2 724 861 B1**
(45) Veröffentlichungstag und Bekanntmachung des Hinweises auf die Patenterteilung: **28.04.2021**
(21) Anmeldenummer: 13189614.4
(22) Anmeldetag: 22.10.2013
(51) Int. Cl.: B41F 13/004, B41F 13/008, G05D 19/00, B41F 13/21, F16F 15/00, G05D 19/02

(54) **Bogendruckmaschine und Verfahren zum Betreiben einer Bogendruckmaschine**
Sheet-fed printing press and method for operating a sheet-fed printing press
Presse à feuilles et procédé de fonctionnement d'une presse à feuilles

(30) Priorität: 23.10.2012 DE 102012219334; 23.09.2013 DE 102013110459
(43) Veröffentlichungstag der Anmeldung: 30.04.2014
(73) Patentinhaber: manroland sheetfed GmbH, 63075 Offenbach (DE)
(72) Erfinder: Kubasiak, Nicolai, 63165 Mühlheim (DE); Herrmann, Thomas, 63450 Hanau (DE); Wiese, Dr.-Ing. Holger, 63179 Obertshausen (DE)

(56) Entgegenhaltungen:
- EP-A1- 0 812 683
- EP-B1- 1 202 147
- DE-A1- 19 545 114
- DE-A1-102005 041 697
- DE-A1-102007 020 727
- DE-A1-102008 009 203
- DE-A1-102009 045 737

## Beschreibung

Die Erfindung betrifft eine Bogendruckmaschine gemäß dem Oberbegriff des Anspruchs 1. Des Weiteren betrifft die Erfindung ein Verfahren zum Betreiben einer Bogendruckmaschine gemäß dem Oberbegriff des Anspruchs 7.

In einer Druckmaschine, wie z. B. einer Bogendruckmaschine, wird ein Bedruckstoff durch mehrere Druckwerke der Druckmaschine bewegt, um den Bedruckstoff zu bedrucken. Jedes Druckwerk einer Druckmaschine verfügt dabei über einen Formzylinder, einen auf dem Formzylinder abrollenden Übertragungszylinder, einen auf den Übertragungszylinder abrollenden Gegendruckzylinder sowie ein Farbwerk und vorzugsweise ein Feuchtwerk. Auf dem Formzylinder ist mindestens eine Druckform angeordnet, wobei Formzylinder auch als Plattenzylinder bezeichnet werden. Auf dem Übertragungszylinder ist mindestens eine Übertragungsform angeordnet, wobei Übertragungszylinder auch als Gummizylinder bezeichnet werden.

Die vorliegende Erfindung betrifft eine Druckmaschine mit mehreren Druckwerken sowie mit mehreren Antrieben. Die Antriebe treiben dabei in Druckwerke, nämlich in einen Zylinder der Druckwerke, ein. Jedem Antrieb der Druckmaschine ist ein separater Antriebsregler zugeordnet, wobei der Antrieb zusammen mit dem jeweiligen Antriebsregler einen Antriebsregelkreis bildet. Der jeweilige Antriebsregler erzeugt auf Basis einer Abweichung zwischen einem Sollwert und einem Istwert ein Stellsignal für den entsprechenden Antrieb des Antriebsregelkreises.

Beim Betrieb einer Druckmaschine können sich an Zylindern der Druckwerke die Druckqualität negativ beeinflussende Drehschwingungen ausbilden. Derartige Drehschwingungen entstehen in einer Druckmaschine beispielsweise durch interne Einflüsse infolge ungleichförmiger Bewegungen von verschiedenen Mechanismen wie zum Beispiel den Greifersteuerungen, dem Vorgreiferantrieb, dem Feucht- und/oder Farbwalzenanlauf an der Kanalkante, sowie den Rückwirkungen des Verreibungsantriebes oder durch den so genannten Heberschlag. Es sind aber auch weitere Schwingungsanregungen aus der Druckmaschine bekannt.

Die Schwingungen bilden sich aber nicht synchron zu den jeweiligen Anregungen aus, zumal die Schwingungsanregungen in aller Regel in einer über die gesamte Maschine ungleichmäßig verteilten Taktung versetzt erfolgen. Die Schwingungen bilden sich vielmehr gemäß den jeweils vorliegenden Steifigkeiten, Massenträgheiten und Dämpfungen in den verschiedenen Antriebsbereichen aus.

Daher macht sich die Detektion der auftretenden Drehschwingungen erforderlich. Ein Schwingungszustand wird über inkrementale Drehgeber am Gummizylinder bzw. Übertragungszylinder bzw. Drucktuchzylinder detektiert. Hierbei erfolgt die Messung zunächst als Drehwinkelsignal, aus dem dann nach einmaliger Ableitung evtl. auch eine Schwingwinkelgeschwindigkeit ermittelt werden kann.

Die Analyse von dem Prozessverlauf entsprechenden Zustandsgrößen dient dabei einerseits der regeltechnischen Synchronisierung von Gummi- bzw. Übertragungs- bzw. Drucktuchzylinder und Form- bzw. Plattenzylinder. Andererseits soll aber auch die Signalaufnahme von Drehschwingungen erfolgen. Der Vergleich der Messwerte mit einem Sollwert liefert danach eine Aussage über die Schwingparameter. Eine zusätzliche Wahrnehmung der Drehschwingungen kann auch über den messbaren elektrischen Strom, der dem Direktantriebsmotor des Platten- oder Formzylinders zugeführt wird, erfolgen.

Aus dem Stand der Technik ist es bereits bekannt, derartige Drehschwingungen an Druckwerken einer Druckmaschine zu kompensieren. So offenbart die EP 1 202 147 B1 ein Verfahren zur Kompensation von Drehschwingungen, bei welchem mit Hilfe harmonischer Ausgleichsmomente Drehschwingungen kompensiert werden. Hierzu ist es erforderlich, vorab über eine modale Analyse der Druckmaschine das Schwingungsverhalten derselben zu analysieren. Dies ist aufwendig und teuer. Es besteht daher ein Bedarf an einer Druckmaschine sowie an einem Verfahren zum Betreiben einer Druckmaschine, bei welcher bzw. mit welchem eine Drehschwingungskompensation mit einfacheren Mitteln erfolgen kann.

Aus der DE 10 2005 041 697 A1 ist eine derartige Druckmaschine bekannt. Eine Bogendruckmaschine ist in jedem Druckwerk mit einem Formzylinder, einem auf dem Formzylinder abrollenden Gummizylinder, einem auf dem Gummizylinder abrollenden Gegendruckzylinder, einem Farbwerk mit Farbauftragwalzen und einem Feuchtwerk mit einer auf dem Formzylinder abrollenden Feuchtauftragwalze versehen. Die Feuchtauftragwalzen werden unter Fortdruckbedingungen in einem Deltabetrieb mit einer von Formzylinder abweichenden Oberflächengeschwindigkeit angetrieben. Dem Formzylinder jedes Druckwerks ist zum eigenmotorischen Antrieb ein Direktantrieb zugeordnet. Der Gummizylinder, der Gegendruckzylinder, das Farbwerk und das Feuchtwerk werden von einem Hauptantrieb der Bogendruckmaschine angetrieben. Eine Regel- bzw. Steuereinrichtung steuert im Fortdruckbetrieb den Direktantrieb so, dass er synchron zum Hauptantrieb läuft. Dabei wird im Deltabetrieb eines Feuchtwerks der Direktantrieb des jeweiligen Formzylinders so angesteuert, dass dann, wenn die Feuchtauftragwalze des Feuchtwerks einen Spannkanal auf dem Formzylinder überrollt, der Direktantrieb trotz der hierdurch verursachten Gleichlaufabweichung weiterhin synchron zum Hauptantrieb läuft. Diese Steuerung erfolgt winkelbezogen und damit synchron zum Kanaldurchlauf an einem jeweiligen Formzylinder.
Weiterhin sollen aus den Gleichlauf-Regelabweichungen aller am Druck beteiligten Druckwerke weitere Stellsignale für den Hauptantrieb und/oder die Direktantriebe der Formzylinder der Druckmaschine erzeugt werden, um eine Schwingungskompensation für die Druckmaschine zu realisieren. Dabei sollen die Gleichlauf-Regelabweichungen der Druckwerke mit dem Schwingungsverhalten der Druckmaschine verglichen werden, wobei eine übergeordnete Steuerungseinrichtung daraus Stellsignale für den Hauptantrieb der Druckmaschine und/oder die Direktantriebe der Formzylinder generiert.

Nachteilig hierbei ist, dass die gezielte Beeinflussung bestimmter Störungen am Formzylinderantrieb nur im Hinblick auf ihr konkretes Entstehungsereignis nicht ausreicht, um das Gesamtschwingungsverhalten wirksam zu beeinflussen.
Die Zuordnung einer übergeordneten Steuerung zur Vermittlung von Stellsignalen zur Drehschwingungskompensation an allen Antrieben lässt außer Acht, dass eine Druckmaschine als komplexes Schwingungsgebilde unterschiedliche Schwingungszustände in verschiedenen Maschinenbereichen hervorbringt, die nicht einheitlich zu bekämpfen sind.

In der DE 10 2009 045 737 A1 wird ein Verfahren zum Betreiben einer Bogendruckmaschine mit mindestens einem Hauptantrieb und mit mindestens einem Druckwerk offenbart. Dem Formzylinder ist dabei ein vom Hauptantrieb unabhängig antreibbarer Eigenantrieb zugeordnet. heitlich zu bekämpfen sind.

Weiterhin ist aus der DE 10 2007 020 727 A1 eine Druckmaschine und ein Verfahren zum Betreiben einer Druckmaschine bekannt.
In einer bekannten Bogendruckmaschine sind mehrere Druckwerke und mehreren Antriebe vorgesehen. Die Antriebe treiben in Druckwerke jeweils über einen Zylinder ein. Jedem Antrieb ist ein separater Antriebsregler zugeordnet, der auf Basis einer Abweichung zwischen einem Sollwert und einem Istwert ein Stellsignal für den entsprechenden Antrieb erzeugt. Dabei wird eine bestimmte Drehschwingungskompensationsgröße generiert, die ausschließlich in einem bestimmten Antriebsregelkreis zur Drehschwingungskompensation gültig ist. So kann lediglich sichergestellt werden, dass in einer Mehrfarbendruckmaschine mit einem oder mehreren Hauptantriebsmotoren und mit separaten Eigenantrieben für jeden einzelnen Platten- bzw. Formzylinder jedes Druckwerkes die Schwingungen am Ort der Antriebe beeinflussbar sind. An keiner Stelle ist jedoch eine Schwingungsdämpfungsmaßnahme für das schwingende Gesamtsystem (Antriebsstrang) vorgesehen.

Diese Lösung weist daher als einen gravierenden Nachteil auf, dass nur ganz bestimmte Bereiche des Antriebssystems der Druckmaschine, wie die Formzylinder selbst oder der Bereich des Hauptantriebes im Sinne einer Schwingungskompensation mit Antriebsmomenten beaufschlagt werden können. Damit ist zur Kompensation von Drehschwingungen in einer Bogendruckmaschine ein erhöhter Aufwand dadurch gegeben, dass entsprechend der Maschinenkonfiguration eine Vielzahl und für den Fall einer Anwendung am Hauptantrieb auch dazu noch Antriebsregler mit großer Komplexität erforderlich sind.

Hiervon ausgehend liegt der vorliegenden Erfindung das Problem zugrunde, eine neuartige Bogendruckmaschine und ein neuartiges Verfahren zum Betreiben einer Bogendruckmaschine zu schaffen.

Dieses Problem wird durch eine Bogendruckmaschine gemäß Anspruch 1 gelöst.

Erfindungsgemäß ist den Antriebsreglern der Direktantriebe der Formzylinder wenigstens je eine Einrichtung zugeordnet, die online während des Betriebs der Druckmaschine aus mindestens einer Zustandsgröße der Antriebsregelkreise, in die die jeweiligen Antriebsregler eingebunden sind, jeweils eine eigenständige Größe für die Kompensation von Drehschwingungen generiert, die im Bereich des/der Hauptantriebe und/oder der mit dem/den Hauptantrieben verbundenen Druckwerksteilen entstehen. Die jeweils ermittelte Drehschwingungskompensationsgröße ist erfindungsgemäß ausschließlich zur Drehschwingungskompensation mittels eines Direktantriebs eines Formzylinders in dem jeweils betroffenen Antriebsregelkreis gültig.

Im Sinne der hier vorliegenden Erfindung wird online während des Betriebs der Druckmaschine aus mindestens je einer Zustandsgröße jedes der Antriebsregelkreise für die Direktantriebe der Druckmaschine für den Antriebsregler dieses Antriebsregelkreises eine Drehschwingungskompensationsgröße generiert, die ausschließlich in diesem Antriebsregelkreis zur Drehschwingungskompensation gültig ist bzw. verwendet wird. Hierzu ist keine modale Analyse der Druckmaschine erforderlich.

Wenn der oder jeder Antriebsregler als kaskadierter Regler aus einer Stromregelung, Drehzahlregelung und Lageregelung ausgebildet ist, kann die für den jeweiligen Antriebsregler mit Hilfe der Einrichtung generierte Drehschwingungskompensationsgröße der Stromregelung, Drehzahlregelung und / oder Lageregelung des jeweiligen Antriebsreglers genutzt werden. Bei der Drehschwingungskompensationsgröße kann es sich demnach um eine Stromgröße, Drehzahlgröße oder Lagegröße handeln, die als Kompensationsgröße der Stromregelung, Drehzahlregelung oder Lageregelung beaufschlagt wird.
Hier wird also vorzugsweise die Regelung des Synchronlaufes zwischen Gummi- bzw. Drucktuch- bzw. Übertragungszylinder und Form- bzw. Plattenzylinder und eine zusätzliche Ausregelung von Störsignalen aus Maschinenschwingungen wenigstens des Hauptantriebes durch parallel zum Regelbetrieb des Eigenantriebes generierte Kompensationsgrößen ermöglicht, wobei die Kompensationsgrößen als Strom-, Drehzahl-, oder Lagegröße ausgeprägt sein kann.

Erfindungsgemäß umfasst jede einem Antriebsregler zugeordnete Einrichtung Mittel, um aus Zustandsgrößen des jeweiligen Antriebsregelkreises eine zu kompensierende Drehschwingung des angetriebenen Zylinders zu detektieren, und um aus der detektierten Drehschwingung die Drehschwingungskompensationsgröße zu generieren. Die Mittel der dem Antriebsregler zugeordneten Einrichtung umfassen dabei eine Funktion, deren Parameter im Sinne einer Adaption während des Betriebs der Druckmaschine anpassbar sind.
So kann etwa eine gegenphasige Beaufschlagung eines Eigenantriebes bzw. Einzelantriebsmotors mit einem entsprechend bemessenen Steuerstrom erfolgen.

Die Regelungswirkung auf das schwingende Gesamtsystem (Antriebsstrang) wird durch jeden Antriebsregler bzw. Eigenantrieb eines Formzylinders separat und bedarfsgerecht ausgeübt. Auf der Grundlage der Signalauswertung der den Eigen- bzw. Direktantrieben direkt oder indirekt zugeordneten Gebersysteme können die hier entsprechend implizit vorliegenden modalen Schwingungsanteile kompensiert werden, ohne dass man dabei die Eigenbewegungen des Hauptantriebes in ihrer Gesamtheit kennen muss. Aufwändige Verfahren zur Identifikation der zu kompensierenden Schwingungen durch modale Analyse sind daher nicht erforderlich. In der Folge ist zusätzlich eine modale Koordination der einzelnen Aktoren zur Schwingungsbeeinflussung untereinander ebenfalls nicht erforderlich. Die Regleranordnung dient nicht nur einer alleinigen, lokal begrenzten Kompensation möglicher Plattenzylinderdrehschwingungen.

Erfindungsgemäß wird die Regelwirkung im Sinne einer aktiven Drehschwingungskompensation über den unmittelbaren Antriebsbereich des Form- bzw. Plattenzylinders hinaus auf den unteren Teil der Druckmaschine, also den Räderzug im Hauptantrieb der Druckmaschine erstreckt. Wesentlich ist hier, dass über eine mechanische Koppelung mittels Rollkontakten im Bereich der Schmitzringe zwischen Gummi- bzw. Drucktuch- bzw. Übertragungszylinder und Form- bzw. Plattenzylinder jedes Druckwerks und sonstige Rollkontakte eine Schwingungsdämpfung erfolgen soll, obwohl keine Zahnradverbindung zwischen den Zylindern vorliegt, da der Form- bzw. Plattenzylinder ja mittels Eigenantrieb unabhängig von den mechanisch gekoppelten Zylindern erfolgt.

Die Übertragung einer geregelten Dämpfungswirkung auf Schwingungen ist grundsätzlich möglich, weil ein Rollkontakt zwischen den Schmitzringen im Bereich der hier angestrebten Betriebszustände der Maschine eine ausreichend große Radial- und auch Tangentialsteifigkeit aufweist. Die in der Abrollung der Schmitzringe von Gummi- und Plattenzylinder vorliegenden Radial- und Tangentialkopplung wirken wie steife Federn in einem dynamischen Gesamtsystem. Die tangentiale Kopplung erfolgt dabei auch innerhalb gewisser Abwicklungsdifferenzen, die sich aus Durchmessertoleranzen zwischen den Schmitzringen von Gummi- und Plattenzylinder ergeben und die als Dehnschlupf im Haftreibungszustand des Hertz'schen Kontaktes auftreten.

Durch eine Nutzung der Eigen- oder Direktantriebe der Form- bzw. Plattenzylinder zur Erzeugung von Schwingungskompensation liegt an jedem Druckwerk einer Bogenoffsetdruckmaschine bereits eine potenzielle Einspeisestelle für kompensierende Drehmomente vor. Damit kann weitestgehend ausgeschlossen werden, dass es nicht kompensierbare Eigenschwingungsformen gibt, weil die Einspeisestellen am Ort eines Schwingungsknotens oder nahe bei einem Schwingungsknoten liegen. Falls also zufällig eine Einspeisestelle in einem Schwingungsknoten zu liegen kommen sollte, werden doch die anderen Einspeisestellen mit hoher Sicherheit nicht in einem Schwingungsknoten liegen und können so die Kompensationsfunktion übernehmen. Aufwändige Verfahren zur modalen Identifikation der zu kompensierenden Schwingungen sind nicht erforderlich: Das dem jeweiligen Antriebsmotor zugeordnete Drehwinkelgebersystem liefert bereits implizit die Information über, an diesem Bereich des Antriebssystems vorhandene modale Schwingungsanteile, und genau diese können vom zugeordneten Motor auch kompensiert werden. Es ist also weder eine spektral differenzierte Kompensation mit harmonischen Gegenmomenten notwendig noch eine modale Koordination der einzelnen Aktuatoren. Das erfindungsgemäße Verfahren zeichnet sich also durch eine hohe Robustheit und Zuverlässigkeit sowie durch die Nutzung mehrerer Antriebsmotoren auch durch einen hohen Wirkungsgrad bei minimiertem Zusatzaufwand für die aktive Drehschwingungskompensation aus.

Das erfindungsgemäße Verfahren zum Betreiben einer Bogendruckmaschine ist in Anspruch 7 definiert.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert.
Dabei zeigt:
- Fig. 1:: eine schematisierte Darstellung einer Bogendruckmaschine mit je einem Direktantrieb für jeden Formzylinder;
- Fig. 2:: ein Druckwerk derselben Bogendruckmaschine in vergrößerter Schemadarstellung und
- Fig. 3: ein Druckwerk entsprechend Figur 2 in einer schematischen frontalen Darstellung.

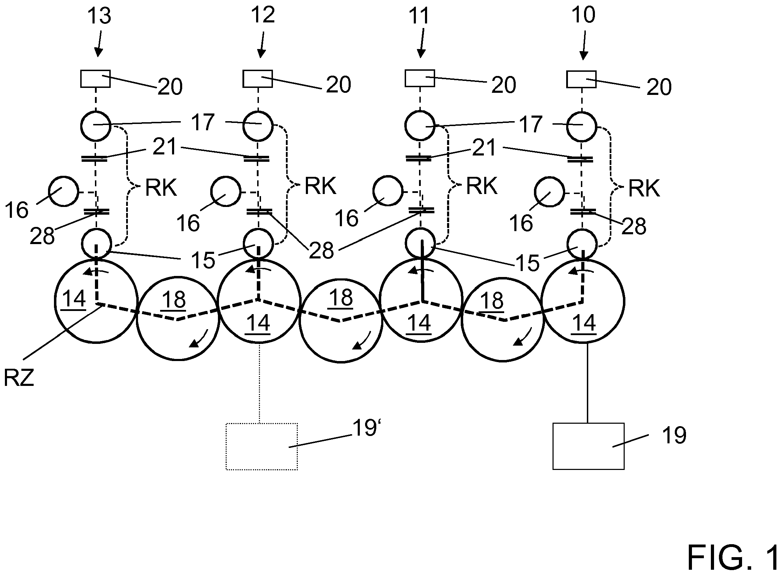

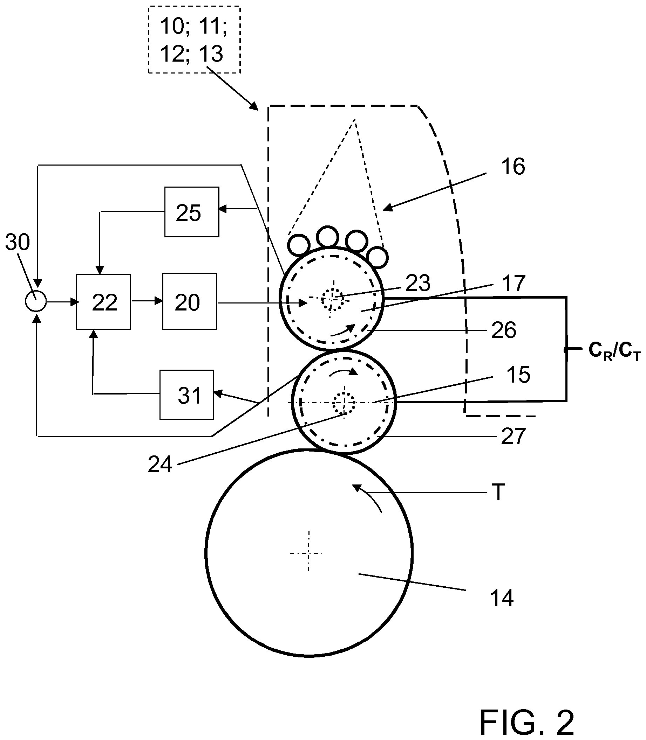

Nachfolgend wird die hier vorliegende Erfindung unter Bezugnahme auf Fig. 1 bis 2 für eine Bogendruckmaschine beschrieben, die vier Druckwerke 10, 11, 12 und 13 umfasst. Jedes der Druckwerke 10 bis 13 der Bogendruckmaschine umfasst gemäß Fig. 1 einen Gegendruckzylinder 14, einen Übertragungszylinder 15, ein Farbwerk 16 sowie einen Formzylinder 17. Zusätzlich kann jedes Druckwerk auch ein Feuchtwerk umfassen.
Formzylinder 15, Farbwerk 16 und Übertragungszylinder 17 sind in Figur 1 zur Darstellung des Funktionszusammenhanges symbolisch als kleine Kreise dargestellt. Die tatsächlichen Größenverhältnisse sind in Figur 2 gezeigt.

Zwischen den Gegendruckzylindern 14 zweier benachbarter Druckwerke 10 und 11, 11 und 12 sowie 12 und 13 ist im gezeigten Ausführungsbeispiel der Fig. 1 jeweils ein Transferzylinder 18 positioniert, um zu bedruckende Bedruckstoffbogen B zwischen den einzelnen Druckwerken 10 bis 13 zu überführen.

Gemäß Fig. 1 weist die Bogendruckmaschine einen oder mehrere Hauptantriebe 19 bzw. 19' auf, wobei der oder die Hauptantriebe 19, 19' direkt oder indirekt über ein Getriebeelement in einen der Gegendruckzylinder 14 des Druckwerks 10 eintreiben. Über den oder die Hauptantriebe 19, 19' sind sämtliche Gegendruckzylinder 14, Übertragungszylinder 15 sowie Farbwerke 16 der Druckwerke 10 bis 13 sowie die Transferzylinder 18 im Sinne eines geschlossenen Räderzugs RZ antreibbar. Der geschlossene Räderzug RZ ist hier symbolisch als strichliierte Verbindungslinie zwischen den Zylindermittelpunkten angedeutet und koppelt alle als Bogen transportierende Zylinder bzw. Trommeln 14, 18 ausgeführten Elemente der Bogendruckmaschine und die Übertragungszylinder 15 drehsteif und in fester Drehbeziehung miteinander.

Gemäß Fig. 1 ist jedem Formzylinder 17 ein separater Direktantrieb 20 zugeordnet, um die Formzylinder 17 aller Druckwerke 10 bis 13 eigenmotorisch anzutreiben. Jeder Formzylinder 17 jedes Druckwerks 10 bis 13 kann dabei über eine Kupplung 21 vom geschlossenen Räderzug RZ, in den alle Gegendruckzylinder 14, Übertragungszylinder 15 und Transferzylinder 18 eingebunden sind, abkuppelbar sein. Weiterhin kann in jedem der Druckwerke 10 bis 13 eine Kupplung 28 im Antriebszug zwischen dem Räderzug RZ und dem Farbwerk 16 vorgesehen sein, so dass die Farbwerke 16 über den Räderzug RZ antreibbar geschaltet oder abgekuppelt werden können (Fig. 2). Im normalen Druckbetrieb sind dabei die Farbwerke 16 mittels der Kupplungen 28 mit dem Räderzug RZ verbunden. Für Hilfsfunktionen können die Antriebe der Farbwerke 16 mittels der Kupplungen 28 vom Räderzug RZ getrennt werden. Ein Durchschalten der Antriebe, so dass alle Kupplungen 21, 28 geschlossen sind, findet nur in sicherheitsrelevanten Nothaltsituationen oder beim Einrichten der Druckmaschine statt.

Neben der durch Zahnräder fest vorgegebenen Drehwinkelkorrelation zwischen den drehenden Elementen im Bereich des Räderzuges RZ ist auch eine Drehwinkelkorrelation zwischen den Formzylindern 17 und den Übertragungszylindern 15 in den jeweiligen Druckwerken 10 bis 13 gegeben.
In Figur 1 ist die Verbindung zwischen beiden Zylindern 17 und 15 als Rollkontakt RK symbolisch bezeichnet. Damit wird also über die geregelte motorische Synchronisation hinaus auch eine mechanische Synchronisationsunterstützung ermöglicht. Diese mechanische Synchronisation wird auf der Basis von weiter unten beschriebenen Laufringen (Schmitzringen 26, 27) durchgeführt, die an entsprechenden Zylindern 15, 17 angebracht sind.

Fig. 2 zeigt Details der Antriebsbeschaffenheit und der Antriebsregelungen der Formzylinder 17 der Druckwerke 10 bis 13 durch die denselben jeweils zugeordneten Direktantriebe 20.

So kann Fig. 2 zunächst entnommen werden, dass jedem Formzylinder 17 eines der Druckwerke 10 bis 13 ein mit dem Formzylinder 17 zusammenwirkender Übertragungszylinder 15 zugeordnet ist. Diese wirken zunächst im Bereich ihrer Arbeitsflächen zusammen, um ein Farbbild zu transferieren. Weiterhin sind dem Formzylinder 17 jeweils stirnseitig die Arbeitsfläche begrenzend und starr mit dem Zylinderkörper verbunden Schmitzringe 26 als Laufringe zugeordnet. In derselben Weise sind dem Übertragungszylinder 15 jeweils stirnseitig die Arbeitsfläche begrenzend und starr mit dem Zylinderkörper verbunden Schmitzringe 27 als Laufringe zugeordnet.
In Arbeitsposition der Druckwerke 10 bis 13 rollen die Schmitzringe 26, 27 unter Pressung aufeinander ab. Die Abrollung wird so ausgeführt, dass der Rollkontakt Relativbewegungen für eine so genannte Drucklängenkorrektur zwischen dem Formzylinder 17 und dem Übertragungszylinder 15 ermöglicht. Dabei wird zum Ausgleich von effektiven Längen des Druckbildes bei der Übertragung der einzelnen Teilfarbbilder auf die Druckbogen mittels eines Direktantriebes 20 und eines jeweiligen Antriebsreglers 22 eine gesteuerte Vor- oder Nacheilung des Formzylinders 17 gegenüber dem Übertragungszylinder 15 durchführt. Dieser Vorgang der Vor- oder Nacheilung wird bei jeder Zylinderumdrehung zyklisch wiederholt, damit die Korrekturmaßnahme für jeden Druckvorgang in gleicher Weise durchgeführt werden kann.

Der Rollkontakt der Schmitzringe 26, 27 unter Pressung wird an jeder Stelle durch eine Radialsteifigkeit C_{R} und eine Tangentialsteifigkeit C_{T} zwischen den Schmitzringen infolge Hertz'scher Pressung beschrieben.
Auf diese Weise ist eine mechanische Koppelung der durch den Kontakt der Schmitzringe 26, 27 zwischen dem Übertragungszylinder 15 und dem Formzylinder 17 jedes Druckwerks 10 bis 13 und die sonstigen Rollkontakte gegeben.
Die genannte mechanische Koppelung ist grundsätzlich dann gegeben, wenn der Hertz'sche Kontakt zwischen den Schmitzringen 26, 27 eine ausreichend große Radialsteifigkeit C_{R} und auch Tangentialsteifigkeit C_{T} aufweist. Eine daraus erfolgende Radial- und Tangentialkopplung wirkt jeweils wie eine steife Feder in einem dynamischen Gesamtsystem. Die tangentiale Kopplung erfolgt dabei infolge Dehnschlupf im Haftreibungszustand des Hertz'schen Kontaktes auch innerhalb gewisser Abwicklungsdifferenzen wie Durchmessertoleranzen und bei gezielten Differenzbewegungen zwischen den Schmitzringen 26, 27 wie bei einem Prozessschritt der oben beschriebenen Drucklängenkorrektur zwischen Übertragungszylinder 15 und Formzylinder 17.

Daher kann bei Bedarf von jedem der Direktantriebe 20 ausgehend eine Antriebsverbindung über den jeweiligen Formzylinder 17, dessen Schmitzringe 26, die kooperierenden Schmitzringe 27 des zugehörigen Übertragungszylinders 15 und den Übertragungszylinder 15 zu dem Räderzug, der alle Bogen transportierenden Zylinder und Trommeln an dem oder den Hauptantrieben 19, 19' verbindet, hergestellt werden.

Weiterhin kann Fig. 2 weiterhin entnommen werden, dass jedem Direktantrieb 20 eines jeden Druckwerks 10, 11, 12 bzw. 13 jeweils ein Antriebsregler 22 zugeordnet ist. Der Antriebsregler 22 erzeugt auf Basis einer Regelabweichung zwischen einem Sollwert und einem Istwert eine Stellgröße für den Direktantrieb 20 des Druckwerks. Bei dem Istwert handelt es sich vorzugsweise um einen Lageistwert des vom Direktantrieb 20 anzutreibenden Formzylinders 17 des jeweiligen Druckwerks, wobei dieser Lageistwert des Formzylinders 17 von einem demselben zugeordneten Lagegeber 23 bereitgestellt wird. Beim Sollwert handelt es sich vorzugsweise um den Lageistwert des mit dem Formzylinder 17 zusammenwirkenden Übertragungszylinders 15 des jeweiligen Druckwerks 10, 11, 12 bzw. 13, wobei dieser Lageistwert des Übertragungszylinders 15 von einem demselben zugeordneten Lagegeber 24 bereitgestellt wird. Eine Regelabweichung zwischen diesem Istwert und diesem Sollwert wird, wie bereits erwähnt, dem Antriebsregler 22 zugeführt, wobei der Antriebsregler 22 auf Basis dieser Regelabweichung ein Stellsignal für den Direktantrieb 20 des Formzylinders 17 des jeweiligen Druckwerks 10, 11, 12 bzw. 13 generiert.

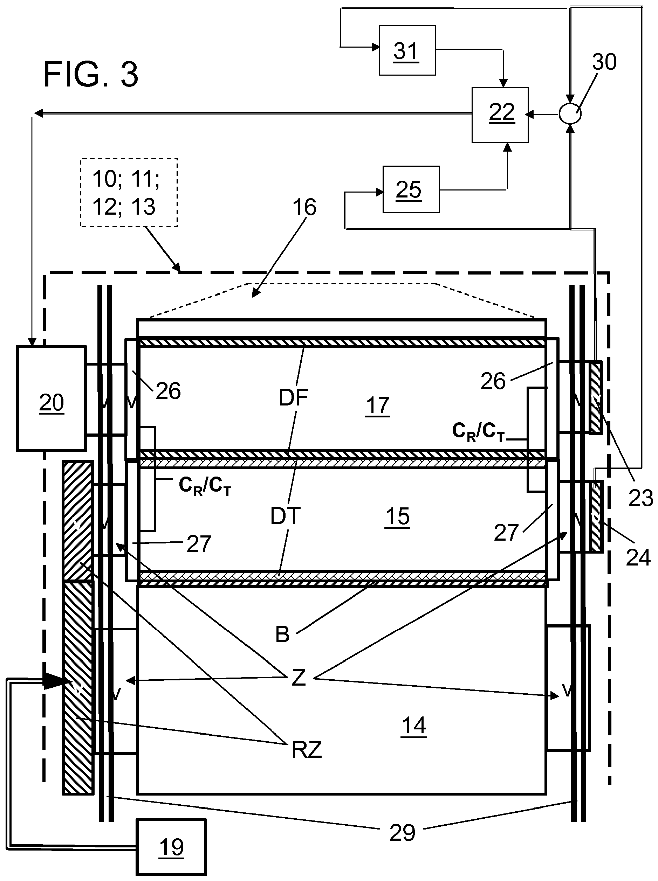

Entsprechend ist in Fig. 3 eine Frontaldarstellung des Druckwerks nach Fig. 2 gezeigt. Hier sieht man die Zuordnung von Formzylinder 17, Übertragungszylinder 15 und Gegendruckzylinder 14 in ihrer Längserstreckung zueinander. Formzylinder 17, Übertragungszylinder 15 und Gegendruckzylinder 14 sind jeweils auf Lagerzapfen Z in einer linken und einer rechten Gestellwand 29 drehbar gelagert. Der Formzylinder 17 trägt eine Druckplatte zur Erzeugung eines Farbbildes mittels eines Farbauftrages von dem Farbwerk 16.

Der Übertragungszylinder 15 trägt ein Drucktuch oder Gummituch, mittels dessen das Farbbild im Wälzspalt zwischen Formzylinder 17 und Übertragungszylinder 15 von der Druckplatte abgenommen wird.
Der Gegendruckzylinder 14 schließlich trägt als Bogen führender Zylinder ein System von nicht dargestellten Greifern zur Führung von Bedruckstoffbogen während des Druckvorganges.
Links und rechts sind endseitig am Formzylinder 17 und am Übertragungszylinder 15 jeweils die Schmitzringe 26, 27 drehfest mit dem jeweiligen Zylinderkörper verbunden angebracht. Die am Formzylinder 17 angeordneten Schmitzringe 26 rollen dabei jeweils auf einem entsprechenden Schmitzring 27 ab, der am Übertragungszylinder 15 angeordnet ist.
Der Gegendruckzylinder 14 und der Übertragungszylinder 15 sind antriebstechnisch durch Zahnräder des Räderzuges RZ drehsteif miteinander gekoppelt. Dem Räderzug RZ ist wiederum der Hauptantrieb 19 zugeordnet.
Dem Formzylinder 17 hingegen ist der Direktantrieb 20 zugeordnet.

Mit einem der Lagerzapfen Z des Formzylinders 17 ist zur Drehlagemessung der Drehgeber 23 drehfest gekoppelt.
Mit einem der Lagerzapfen Z des Übertragungszylinders 15 ist zur Drehlagemessung der Drehgeber 24 drehfest gekoppelt.

Der Rollkontakt der paarweise unter Pressung aufeinander abrollenden Schmitzringe 26, 27 wird, wie zuvor schon erläutert, an jeder Stelle der Oberflächen oder in jeder Drehlagenposition der Schmitzringe 26, 27 durch Werte einer Radialsteifigkeit C_{R} und einer Tangentialsteifigkeit C_{T} zwischen den Schmitzringen 26, 27 infolge Hertz'scher Pressung beschrieben.

In Bezug auf die Darstellungen in den Figuren 2 und 3 erfolgt nun die Erläuterung der funktionellen Zusammenhänge der vorliegenden Erfindung.
Insbesondere aus Figur 3 in Verbindung mit Figur 1 ist hierbei gut zu erkennen, dass sich im unteren Druckwerksbereich des Gegendruckzylinders 14 und des Drucktuchzylinders 15 ein Antriebssystem gebildet wird, das durch die mechanisehe Koppelung über den Räderzug RZ zu einer gekoppelten Schwingung mit Anregungen aus der gesamten Maschine und insbesondere im Bereich des Räderzuges RZ führt.
Diese Schwingung des Antriebssystems insbesondere des Hauptantriebs mit dem Räderzug RZ soll wirksam gedämpft werden. Dazu ist folgendes vorgesehen:
Jedem Direktantrieb 20 des Druckwerks 10, 11, 12 bzw. 13 ist ein Antriebsregler 22 zugeordnet ist. Der Antriebsregler 22 erzeugt auf der Grundlage einer von einer Vergleichereinrichtung 30 bereitgestellten Regelabweichung zwischen einem Sollwert und einem Istwert eine Stellgröße für den Direktantrieb 20 des Druckwerks. Bei dem Istwert handelt es sich vorzugsweise um einen Lageistwert des vom Direktantrieb 20 anzutreibenden Formzylinders 17 des jeweiligen Druckwerks, wobei dieser Lageistwert des Formzylinders 17 von einem demselben zugeordneten Lagegeber 23 bereitgestellt wird. Beim Sollwert handelt es sich vorzugsweise um den Lageistwert des mit dem Formzylinder 17 zusammenwirkenden Übertragungszylinders 15 des jeweiligen Druckwerks 10, 11, 12 bzw. 13, wobei dieser Lageistwert des Übertragungszylinders 15 von einem demselben zugeordneten Lagegeber 24 bereitgestellt wird. Die genannte Regelabweichung zwischen diesem Istwert und diesem Sollwert wird, wie bereits erwähnt, dem Antriebsregler 22 von einer Vergleichereinrichtung 30 zugeführt. Daraus folgend generiert der Antriebsregler 22 auf der Basis dieser Regelabweichung ein Stellsignal für den Direktantrieb 20 des Formzylinders 17 zur Synchronisierung der Antriebsbewegung des Formzylinders 17 mit der Drehbewegung des mit ihm zusammenwirkenden Übertragungszylinders 15 im jeweiligen Druckwerk 10, 11, 12 bzw. 13.

Um bei einer derartigen Druckmaschine eine Drehschwingungskompensation zu gewährleisten, wird erfindungsgemäß vorgeschlagen, dem Antriebsregler 22 des Direktantriebs 20 mindestens eines Druckwerks 10, 11, 12 bzw. 13, erfindungsgemäß dem Antriebsregler 22 des Direktantriebs 20 jedes Druckwerks 10, 11, 12 bzw. 13, eine zweite Einrichtung 31 und/oder eine erste Einrichtung 25 zuzuordnen, die online während des Betriebs der Druckmaschine aus mindestens einer Zustandsgröße des entsprechenden Antriebsregelkreises, in den der jeweilige Antriebsregler 22 eingebunden ist, eine Drehschwingungskompensationsgröße generiert, die ausschließlich in diesem Antriebsregelkreis zur Drehschwingungskompensation verwendet wird bzw. für diesen Antriebsregelkreis gültig ist.

Im Ausführungsbeispiel der Fig. 2 und 3 ist jedem Antriebsregler 22 jedes Direktantriebs 20 eines jeden Druckwerks 10 bis 13 eine derartige erste und zweite Einrichtung 25 und 31 zugeordnet, die eine ausschließlich für den jeweiligen Antriebsregler 22 gültige Drehschwingungskompensationsgröße generiert.

Im gezeigten Ausführungsbeispiel dient als Zustandsgröße für die erste Einrichtung 25,
aus der die Drehschwingungskompensationsgröße während des Betriebs online generiert wird, der Istwert des jeweiligen Antriebsregelkreises, nämlich der Lageistwert des entsprechenden Formzylinders 17, also das Messsignal des Drehgebers 23. Auch kann als Zustandsgröße, aus der die Drehschwingungskompensationsgröße während des Betriebs online generiert wird, ein Motorstrom oder eine Motordrehzahl des Direktantriebs 20 oder jede andere regelungstechnische Zustandsgröße des jeweiligen Antriebsregelkreises herangezogen werden.

Weiterhin dient als Zustandsgröße für die zweite Einrichtung 31, aus der die Drehschwingungskompensationsgröße während des Betriebs online generiert wird, der Istwert des jeweiligen Antriebsregelkreises, nämlich der Lageistwert des entsprechenden Übertragungszylinders 15, also das Messsignal des Drehgebers 24.

Die jedem Antriebsregler 22 jedes Direktantriebs 20 zugeordnete zweite Einrichtung 31 und erste Einrichtung 25 verfügt jeweils über ein erstes Mittel, um aus der oder jeder Zustandsgröße des jeweiligen Antriebsregelkreises, hier aus dem Lageistwert des Übertragungszylinders 15 oder des Formzylinders 17, eine zu kompensierende Drehschwingung des angetriebenen Übertragungszylinders 15 oder Formzylinders 17 zu detektieren. Weiterhin verfügt diese zweite Einrichtung 31 und erste Einrichtung 25 über ein zweites Mittel, um aus der detektierten Drehschwingung die Drehschwingungskompensationsgröße für den jeweiligen Antriebsregelkreis zu generieren. Diese Drehschwingungskompensationsgröße wird dem Regelsignal zur Synchronisation der Drehbewegungen von Formzylinder 17 und Übertragungszylinder 15 überlagert.

Die Regleranordnung mit den Antriebsreglern 22 dient erfindungsgemäß nunmehr nicht nur einer alleinigen, lokal begrenzten Kompensation möglicher Drehschwingungen der Formzylinder 17. Die Regelwirkung im Sinne einer aktiven Drehschwingungskompensation erstreckt sich über den unmittelbaren Bereich jedes Formzylinders 17 hinaus auf den Übertragungszylinder 15 und damit auf den unteren Teil der Druckmaschine (Räderzug RZ) über die mechanische Kopplung der Schmitzringkontakte zwischen den jeweiligen Übertragungszylindern 15 und Formzylindern 17 jedes der Druckwerke 10 bis 13.

Nach einer vorteilhaften Weiterbildung ist vorgesehen, dass die erfindungsgemäße Regelung zur Drehschwingungskompensation sich während des Betriebs der Druckmaschine im Sinne einer Adaption online ändert. Das erste Mittel und das zweite Mittel einer jedem Antriebsregler 22 zugeordneten zweiten Einrichtung 31 und/oder ersten Einrichtung 25 umfasst dabei jeweils mindestens eine Funktion, wobei mindestens ein Parameter dieser Funktionen im Sinne einer Adaption online während des Betriebs der Druckmaschine anpassbar ist.

Die Adaption kann dabei auf Grundlage der Auswertung eines zusätzlichen Kriteriums, wie z. B. eines maximalen Schleppfehlers oder temporären Schleppfehlers, zu besonders interessanten Betriebspunkten erfolgen, um dabei entsprechend angepasste Drehschwingungskompensationsgrößen zu generieren. Bei den Drehschwingungskompensationsgrößen handelt es sich um über der Zeit veränderliche Kompensationsgrößen.
Gemäß Fig. 1 und 2 erfolgt demnach im Bereich jedes Druckwerks 10 bis 13, dem jeweils ein Direktantrieb 20 zugeordnet ist, unabhängig von den anderen Druckwerken online während des Betriebs der Druckmaschine eine Drehschwingungskompensation. Diese Drehschwingungskompensation erfolgt unter Verwendung der bereits vorhandenen Drehgeber 23, 24 der Formzylinder 17 sowie Übertragungszylinder 15 der jeweiligen Druckwerke 10 bis 13.

Unter Bezugnahme auf Fig. 1, 2 und 3 wurde die Erfindung an einer Bogendruckmaschine beschrieben, deren Druckwerke Direktantriebe 20 für die Formzylinder 17 derselben aufweisen. Dabei ist jedem Antriebsregler 22 eines jeden Direktantriebs 20 eines jeden Druckwerks eine zweite Einrichtung 31 und/oder erste Einrichtung 25 zur Drehschwingungskompensation zugeordnet, die für jeden Antriebsregler 22 und damit für jedes Druckwerk 10 bis 13 individuell eine Drehschwingungskompensationsgröße generiert.

Es wurde erkannt, dass in Bezug auf die in Figuren 1 und 3 dargestellte Anordnung eines Antriebssystems für ein Druckwerk mit in einem ersten Teilsystem über einen Räderzug RZ gekoppelten Antriebsbereich, der von einem zentralen Hauptantrieb 19 angetrieben wird, und einem separat mittels eines Direktantriebs 20 angetriebenen zweiten Teilsystem des Antriebs die mechanische Koppelung über einen Rollkontakt zwischen den beiden Teilsystemen für eine Beeinflussung des Schwingungsverhaltens des gesamten Antriebssystems nutzbar ist. Die Einkoppelung eines Momentes zur Schwingungsdämpfung erfolgt dabei ausgehend von einem oder mehreren Direktantrieben 20 im Hinblick auf die Längsachsen der Druckwerkszylinder quasi symmetrisch über die Rollkontakte der Schmitzringe 26, 27 von Formzylinder 17 und Drucktuchzylinder 15. Da die Schmitzringe 26, 27 drehsteif an den Zylindern 17, 15 angeordnet sind und der Übertragungszylinder 15 drehsteif mit dem Räderzug RZ gekoppelt ist, kann sichergestellt werden, dass das aus der Regelung zur Drehschwingungskompensation sich ergebende Kompensationsmoment auf effiziente Weise und auf kürzestem Weg in das Antriebssystem des Räderzuges RZ eingeleitet wird.
So wird sichergestellt, dass die Einwirkung des Dämpfungsmomentes mit maximal möglichem Wirkungsgrad erfolgt und damit zur schnellst möglichen Schwingungsreduzierung im Antriebssystem der Druckmaschine führt.

Weiterhin wird als grundlegend für die Erfindung erkannt, dass durch Nutzung der Direktantriebe 20 bereits an jedem der Druckwerke 10 bis 13 der Bogenoffsetdruckmaschine eine potenzielle Einspeisestelle zur Zuführung von Drehschwingungen kompensierenden Drehmomenten vorliegt. Damit kann weitestgehend ausgeschlossen werden, dass es nicht kompensierbare Eigenschwingungsformen gibt, bei denen die Einspeisestellen in oder nahe bei einem Schwingungsknoten liegen, wo also aus diesem Grund eine Drehschwingungskompensation auch nicht ausgeführt werden könnte.
Aufwändige Verfahren zur modalen Identifikation der zu kompensierenden Schwingungen sind daher hier nicht erforderlich: Das einem jeweiligen Antriebsmotor zugeordnete Gebersystem, das beispielsweise optische Inkrementalgeber aufweisen kann, liefert die Schwingungsinformationen über an diesem Bereich des Antriebssystems vorhandene kompensierbare modale Schwingungsanteile, und genau diese können vom zugeordneten Antriebsmotor auch kompensiert werden. Es ist also weder eine spektral differenzierte Kompensation mit harmonischen Gegenmomenten notwendig noch eine modale Koordination der einzelnen Aktoren. Das erfindungsgemäße Verfahren zeichnet sich also durch eine hohe Robustheit und Zuverlässigkeit sowie durch die Nutzung mehrerer Motoren auch durch einen hohen Wirkungsgrad bei minimiertem Zusatzaufwand für die aktive Drehschwingungskompensation aus.

Die zweite und erste Einrichtung 31 und 25 sind gleichzeitig oder alternativ einsetzbar, so dass eine Drehschwingungskompensation auf Basis der Bewegung des Formzylinders 17 und/oder des Übertragungszylinders 15 erfolgen kann.

Erfindungsgemäß wird also mit dem beschriebenen Regelsystem eine Möglichkeit zur Drehschwingungskompensation geschaffen, die in einem mit einem oder mehreren Hauptantrieben 19, 19' verbundenen Räderzug RZ, der alle Bogen transportierenden Transfertrommeln 18 und Gegendruckzylinder 14 und Übertragungszylinder 15 der Druckwerke 10 bis 13 verbindet, von den nicht mit dem Räderzug RZ direkt gekoppelten Formzylindern 17 aus über deren Direktantriebe 22 durchgeführt wird.

Dabei wird eine geregelte Drehschwingungskompensation so durchgeführt, dass einerseits infolge eines jeweils gegebenen Schwingungszustandes im Bereich des Räderzuges RZ überhaupt eine Kompensation möglich ist und dass andererseits die Drehschwingungskompensation dem jeweils lokal vorliegenden Schwingungszustand im Bereich eines der Druckwerke 10 bis 13 angepasst ausgeführt wird. Hierbei besteht die Möglichkeit zu einer aktiven Schwingungsdämpfung beispielsweise dadurch, dass den höherfrequenten Drehzahl- oder Lageschwingungen im Antriebsregelkreis nicht zu 100% gefolgt wird, um eben diesen Schwingungen so entgegen wirken zu können. Diese Maßnahme kann etwa durch eine zusätzliche der Lageregelung überlagerte Kompensationsgröße geschehen. Bei einem derartigen Verfahren dürfen Grenzdrehmomente nicht überschritten werden, die durch das Antriebssystem vorgegeben werden. Die Grenzdrehmomente beziehen sich dabei auf die übertragbaren Drehmomente in den Reibantrieben zwischen den Zylindern, die einerseits die Synchronisation beeinflussen und andererseits die Übertragung der Dämpfungsmomente sicherstellen müssen.
- 10: Druckwerk
- 11: Druckwerk
- 12: Druckwerk
- 13: Druckwerk
- 14: Gegendruckzylinder
- 15: Übertragungszylinder
- 16: Farbwerk
- 17: Formzylinder
- 18: Transferzylinder
- 19: Hauptantrieb
- 19': Hauptantrieb
- 20: Direktantrieb
- 21: Kupplung
- 22: Antriebsregler
- 23: Drehgeber
- 24: Drehgeber
- 25: erste Einrichtung
- 26: Schmitzring
- 27: Schmitzring
- 28: Kupplung
- 29: Seitenwand
- 30: Vergleichereinrichtung
- 31: zweite Einrichtung
- C_{R}: radiale Steifigkeit
- C_{T}: tangentiale Steifigkeit
- RZ: Räderzug
- RK: Rollkontakt
- B: Druckbogen, Substratbogen, Bogen
- DF: Druckform, Druckplatte
- DT: Drucktuch, Gummituch
- T: Bogentransportrichtung

## Patentansprüche

1. Bogendruckmaschine, mit mehreren Druckwerken (10, 11, 12, 13), wobei jedes Druckwerk (10, 11, 12, 13) einen Formzylinder (17), einen auf dem Formzylinder (17) abrollenden Übertragungszylinder (15), einen auf dem Übertragungszylinder (15) abrollenden Gegendruckzylinder (14), ein Farbwerk (16) sowie vorzugsweise ein Feuchtwerk aufweist,
- wobei die Bogendruckmaschine mindestens einen Hauptantrieb (19) aufweist, um über einen Räderzug (RZ) die Übertragungszylinder (15), die Gegendruckzylinder (14), die Farbwerke (16) sowie vorzugsweise die Feuchtwerke der Druckwerke (10, 11, 12, 13) anzutreiben, und
- wobei dem Formzylinder (17) jedes Druckwerks (10, 11, 12, 13) jeweils ein Direktantrieb (20) zugeordnet ist, um die Formzylinder (17) der Druckwerke (10, 11, 12, 13) eigenmotorisch anzutreiben,
- wobei jedem Direktantrieb (20) ein separater Antriebsregler (22) zugeordnet ist, der auf Basis einer Abweichung zwischen einem Sollwert und einem Istwert ein Stellsignal für den entsprechenden Antrieb erzeugt,
- wobei den Antriebsreglern (22) je eine Einrichtung zugeordnet ist, die online während des Betriebs der Bogendruckmaschine aus mindestens einer Zustandsgröße des Antriebsregelkreises, in den der jeweilige Antriebsregler (22) eingebunden ist, eine Drehschwingungskompensationsgröße generiert, die ausschließlich in dem jeweiligen Antriebsregelkreis zur Drehschwingungskompensation gültig ist,
- wobei ein erstes Mittel vorgesehen ist, um aus der oder jeder Zustandsgröße des jeweiligen Antriebsregelkreises eine zu kompensierende Drehschwingung des jeweils angetriebenen Zylinders zu detektieren, und
- wobei ein zweites Mittel vorgesehen ist, um aus der detektierten Drehschwingung die Drehschwingungskompensationsgröße für den jeweiligen Antriebsregelkreis zu generieren,
- wobei jeder Antriebsregler (22) mit Drehlagemessmitteln (23, 24) in Verbindung steht, die dem Eingriffsbereich des mittels des Antriebsreglers (22) angesteuerten Direktantriebes (20) in einem jeweiligen Druckwerk (10, 11, 12, 13) zugeordnet sind,
**dadurch gekennzeichnet,**
- **dass** jeder Antriebsregler (22) zur Aufnahme von Signalen zur Schwingungsidentifikation im Räderzug (RZ) der Bogendruckmaschine ausgebildet ist,
wobei der Direktantrieb (20) jedes Formzylinders (17) während des Betriebs der Druckmaschine durch Rollkontakt mit Schwingungen ausführenden Elementen verbunden ist,
wobei die Schwingungen ausführenden Elemente mit dem Räderzug (RZ) und/oder mit dem Hauptantrieb (19, 19') drehsteif gekoppelt sind, wobei der Direktantrieb (20) jedes Formzylinders (17) während des Betriebs der Druckmaschine durch drehsteif angekoppelte Schmitzringe (26) über Rollkontakt mit drehsteif mit dem Übertragungszylinder (15) verbundenen Schmitzringen (27) gekoppelt ist, wobei jeder Formzylinder (17) über einen mit ihm zusammenwirkenden Übertragungszylinder (15) mit Schwingungen ausführenden Elementen verbunden ist,
wobei das Dämpfungsmoment mit maximal möglichem Wirkungsgrad erfolgt und damit zu einer Schwingungsreduzierung im Antriebssystem der Druckmaschine führt.

2. Druckmaschine nach Anspruch 1,
**dadurch gekennzeichnet,**
**dass** die ersten Mittel und zweiten Mittel einer dem Antriebsregler (22) zugeordneten zweiten Einrichtung (31), die dem Übertragungszylinder (15) zugeordnet ist, jeweils mindestens eine Funktion umfassen, wobei mindestens ein Parameter dieser Funktionen im Sinne einer Adaption online während des Betriebs der Druckmaschine anpassbar ist, wobei die zweite Einrichtung (31) mit einem Drehgeber (23) gekoppelt ist, der dem Übertragungszylinder (15) zugeordnet ist.

3. Druckmaschine nach einem oder mehreren der Ansprüche 1 bis 2,
**dadurch gekennzeichnet, dass** das erste Mittel und das zweite Mittel der dem Antriebsregler (22) zugeordneten ersten Einrichtung (25), die dem Formzylinder (17) zugeordnet ist, jeweils mindestens eine Funktion umfassen, wobei mindestens ein Parameter dieser Funktionen im Sinne einer Adaption online während des Betriebs der Druckmaschine anpassbar ist, wobei die zweite Einrichtung (31) mit einem Drehgeber (24) gekoppelt ist, der dem Formzylinder (17) zugeordnet ist.

4. Druckmaschine nach einem oder mehreren der Ansprüche 1 bis 3,
**dadurch gekennzeichnet, dass** jedem Antriebsregler (22) eines Direktantriebs (20) eine zweite Einrichtung (31) zur Drehschwingungskompensation zugeordnet ist, wobei der einem Direktantrieb (20) zugeordnete Antriebsregler (22) aus dem Istwert des entsprechenden Antriebsregelkreises, insbesondere aus einem Lageistwert des vom Hauptantrieb angetriebenen Übertragungszylinders (15), und aus dem Sollwert des entsprechenden Antriebsregelkreises, insbesondere aus einem Lageistwert des auf dem Formzylinder (17) abrollenden Übertragungszylinders (15), ein Stellsignal für den Direktantrieb (20) des Formzylinders (17) erzeugt, und wobei die zweite Einrichtung (31) zur Drehschwingungskompensation aus der oder jeder Zustandsgröße des entsprechenden Antriebsregelkreises, insbesondere aus dem Lageistwert des Übertragungszylinders (15), online während des Betriebs der Druckmaschine die Drehschwingungskompensationsgröße generiert, die ausschließlich in diesem Antriebsregelkreis zur Drehschwingungskompensation gültig ist.

5. Druckmaschine nach einem oder mehreren der Ansprüche 1 bis 4,
**dadurch gekennzeichnet, dass** jedem Antriebsregler (22) eines Direktantriebs (20) eine erste Einrichtung (25) zur Drehschwingungskompensation zugeordnet ist, wobei der einem Direktantrieb (20) zugeordnete Antriebsregler (22) aus dem Istwert des entsprechenden Antriebsregelkreises, insbesondere aus einem Lageistwert des angetriebenen Formzylinders (17), und aus dem Sollwert des entsprechenden Antriebsregelkreises, insbesondere aus einem Lageistwert des auf dem Formzylinder (17) abrollenden Übertragungszylinders (15), ein Stellsignal für den Direktantrieb (20) des Formzylinders (17) erzeugt, und wobei die erste Einrichtung (25) zur Drehschwingungskompensation aus der oder jeder Zustandsgröße des entsprechenden Antriebsregelkreises, insbesondere aus dem Lageistwert des Formzylinders (17), online während des Betriebs der Druckmaschine die Drehschwingungskompensationsgröße generiert, die ausschließlich in diesem Antriebsregelkreis zur Drehschwingungskompensation gültig ist.

6. Druckmaschine nach einem der Ansprüche 1 bis 5,
**dadurch gekennzeichnet, dass** jeder Antriebsregler (22) ein kaskadierter Regler aus einer Stromregelung, Drehzahlregelung und Lageregelung ist, wobei die für den jeweiligen Antriebsregler (22) generierte Drehschwingungskompensationsgröße in der Stromregelung, Drehzahlregelung und Lageregelung nutzbar ist.

7. Verfahren zum Betreiben einer Bogendruckmaschine, mit mehreren Druckwerken (10, 11, 12, 13), wobei jedes Druckwerk (10, 11, 12, 13) einen Formzylinder (17),
einen auf dem Formzylinder (17) abrollenden Übertragungszylinder (15), einen auf dem Übertragungszylinder (15) abrollenden Gegendruckzylinder (14), ein Farbwerk (16) sowie vorzugsweise ein Feuchtwerk aufweist,
wobei die Bogendruckmaschine mindestens einen Hauptantrieb (19) aufweist, um über einen Räderzug (RZ) die Übertragungszylinder (15), die Gegendruckzylinder (14), die Farbwerke (16) sowie vorzugsweise die Feuchtwerke der Druckwerke (10, 11, 12, 13) anzutreiben, und wobei dem Formzylinder (17) jedes Druckwerks (10, 11, 12, 13) jeweils ein Direktantrieb (20) zugeordnet ist, um die Formzylinder (17) der Druckwerke (10, 11, 12, 13) eigenmotorisch anzutreiben, und
wobei jedem Antrieb ein separater Antriebsregler (22) zugeordnet ist, der auf Basis einer Abweichung zwischen einem Sollwert und einem Istwert ein Stellsignal für den entsprechenden Antrieb erzeugt,
indem online während des Betriebs der Druckmaschine für mindestens einen Antriebsregler (22) aus mindestens einer Zustandsgröße des Antriebsregelkreises, in den der jeweilige Antriebsregler (22) eingebunden ist, eine Drehschwingungskompensationsgröße generiert wird, die ausschließlich in diesem Antriebsregelkreis zur Drehschwingungskompensation verwendet wird, **dadurch gekennzeichnet,**
**dass** die Antriebsregelkreise Antriebe als Direktantriebe der Formzylinder (17) der Druckwerke ansteuern, dass aus der oder jeder Zustandsgröße des jeweiligen Antriebsregelkreises eine zu kompensierende Drehschwingung eines jeweils angetriebenen Zylinders in dem mit dem Formzylinder (17) in Verbindung stehenden Bereich des Räderzuges (RZ) detektiert wird, wobei aus der detektierten Drehschwingung die Drehschwingungskompensationsgröße für den jeweiligen Antriebsregelkreis generiert wird,
wobei Schmitzringe (26) drehsteif an jedem Ende der Formzylinder (17) und Übertragungszylinder (15) angekoppelt sind, wobei jeder Formzylinder (17) über einen mit ihm zusammenwirkenden Übertragungszylinder (15) mit Schwingungen ausführenden Elementen verbunden ist,
wobei die Schwingungen ausführenden Elemente mit dem Räderzug (RZ) und/oder mit dem Hauptantrieb (19, 19') drehsteif gekoppelt sind,
so dass eine Schwingungsdämpfung erreicht wird.

8. Verfahren nach Anspruch 7,
**dadurch gekennzeichnet, dass** zur Generierung der Drehschwingungskompensationsgröße in der zweiten Einrichtung (31) das Messsignal des dem Übertragungszylinder (15) zugeordneten Drehgebers (24) erfasst und hinsichtlich der enthaltenen Schwingungsformen ausgewertet wird.

9. Verfahren nach Anspruch 7 oder 8,
**dadurch gekennzeichnet, dass** zur Generierung der Drehschwingungskompensationsgröße in der ersten Einrichtung (25) das Messsignal des dem Formzylinder (17) zugeordneten Drehgebers (23) erfasst und hinsichtlich der enthaltenen Schwingungsformen ausgewertet wird.

10. Verfahren nach einem oder mehreren der Ansprüche 7 bis 9,
**dadurch gekennzeichnet, dass** eine aktive Schwingungsdämpfung dadurch durchgeführt wird, dass ermittelten höherfrequenten Drehzahl- oder Lageschwingungen im Antriebsregelkreis nicht vollständig gefolgt wird, wobei eine zusätzliche der Lageregelung überlagerte Kompensationsgröße vorgesehen wird und dass die Regelung sicherstellt, dass vorgegebene Grenzdrehmomente nicht überschritten werden.

## Claims

1. A sheet-fed printing press, comprising several printing units (10, 11, 12, 13), wherein each printing unit (10, 11, 12, 13) has a forme cylinder (17), a transfer cylinder (15) rolling on the forme cylinder (17), an impression cylinder (14) rolling on the transfer cylinder (15), an inking unit (16), as well as preferably a dampening unit,
- wherein the sheet-fed printing press has at least one main drive (19), in order to drive the transfer cylinders (15), the impression cylinders (14), the inking units (16), as well as preferably the dampening units of the printing units (10, 11, 12, 13) via a gear train (RZ), and
- wherein a direct drive (20) is in each case assigned to the forme cylinder (17) of each printing unit (10, 11, 12, 13), in order to automatically drive the forme cylinders (17) of the printing units (10, 11, 12, 13),
- wherein a separate drive controller (22), which generates a control signal for the corresponding drive on the basis of a deviation between a nominal value and an actual value, is assigned to each direct drive (20),
- wherein a respective mechanism is assigned to the drive controllers (22), which mechanism, online during the operation of the sheet-fed printing press, generates a rotational oscillation compensation variable, which is valid exclusively in the respective drive control circuit for the rotational oscillation compensation, from at least one state variable of the drive control circuit, into which the respective drive controller (22) is integrated,
- wherein a first means is provided, in order to detect a rotational oscillation, which is to be compensated, of the respectively driven cylinder from the or each state variable of the respective drive control circuit, and
- wherein a second means is provided, in order to generate the rotational oscillation compensation variable for the respective drive control circuit from the detected rotational oscillation,
- wherein each drive controller (22) communicates with rotational position measuring means (23, 24), which are assigned to the engagement region of the direct drive (20), which is controlled by means of the drive controller (22), in a respective printing unit (10, 11, 12, 13),
**characterized in**
- **that** each drive controller (22) is formed to receive signals for the oscillation identification in the gear train (RZ) of the sheet-fed printing press,
wherein the direct drive (20) of each forme cylinder (17) is connected by means of rolling contact to elements performing oscillations during the operation of the printing press,
wherein the elements performing oscillations are coupled in a torsionally rigid manner to the gear train (RZ) and/or to the main drive (19, 19'),
wherein the direct drive (20) of each forme cylinder (17) is coupled by means of bearer rings (26), which are coupled in a torsionally rigid manner, to bearer rings (27), which are connected in a torsionally fixed manner to the transfer cylinder (15) via rolling contact during the operation of the printing press,
wherein each forme cylinder (17) is connected to elements performing oscillations via a transfer cylinder (15) cooperating with said forme cylinder,
wherein the damping torque takes place with maximally possible efficiency and thus leads to an oscillation reduction in the drive system of the printing press.

2. The printing press according to claim 1,
**characterized in**
**that** the first means and second means of a second mechanism (31), which is assigned to the drive controller (22) and which is assigned to the transfer cylinder (15), each comprise at least one function, wherein at least one parameter of these functions can be adapted online during the operation of the printing press in terms of an adaptation, wherein the second mechanism (31) is coupled to a rotary encoder (23), which is assigned to the transfer cylinder (15).

3. The printing press according to one or several of claims 1 to 2, **characterized in that** the first means and the second means of the first mechanism (25), which is assigned to the drive controller (22) and which is assigned to the forme cylinder (17), each comprise at least one function, wherein at least one parameter of these functions can be adapted online during the operation of the printing press in terms of an adaptation, wherein the second mechanism (31) is coupled to a rotary encoder (24), which is assigned to the forme cylinder (17).

4. The printing press according to one or several of claims 1 to 3,
**characterized in that** a second mechanism (31) for the rotational oscillation compensation is assigned to each drive controller (22) of a direct drive (20), wherein the drive controller (22), which is assigned to a direct drive (20), generates a control signal for the direct drive (20) of the forme cylinder (17) from the actual value of the corresponding drive control circuit, in particular from an actual position value of the transfer cylinder (15) driven by the main drive, and from the nominal value of the corresponding drive control circuit, in particular from an actual position value of the transfer cylinder (15) rolling on the forme cylinder (17), and wherein the second mechanism (31) for the rotational oscillation compensation generates the rotational oscillation compensation variable, which is valid exclusively in this drive control circuit for the rotational oscillation compensation, from the or each state variable of the corresponding drive control circuit, in particular from the actual position value of the transfer cylinder (15), online during the operation of the printing press.

5. The printing press according to one or several of claims 1 to 4,
**characterized in that** a first mechanism (25) for the rotational oscillation compensation is assigned to each drive controller (22) of a direct drive (20), wherein the drive controller (22), which is assigned to a direct drive (20), generates a control signal for the direct drive (20) of the forme cylinder (17) from the actual value of the corresponding drive control circuit, in particular from an actual position value of the driven forme cylinder (17), and from the nominal value of the corresponding drive control circuit, in particular from an actual position value of the transfer cylinder (15) rolling on the forme cylinder (17), and wherein the first mechanism (25) for the rotational oscillation compensation generates the rotational oscillation compensation variable, which is valid exclusively in this drive control circuit for the rotational oscillation compensation, from the or each state variable of the corresponding drive control circuit, in particular from the actual position value of the forme cylinder (17), online during the operation of the printing press.

6. The printing press according to one of claims 1 to 5, **characterized in that** each drive controller (22) is a cascaded controller of a current control, speed control, and position control, wherein the rotational oscillation compensation variable, which is generated for the respective drive controller (22), can be used in the current control, speed control, and position control.

7. A method for operating a sheet-fed printing press, comprising several printing units (10, 11, 12, 13), wherein each printing unit (10, 11, 12, 13) has a forme cylinder (17), a transfer cylinder (15) rolling on the forme cylinder (17), an impression cylinder (14) rolling on the transfer cylinder (15), an inking unit (16), as well as preferably a dampening unit,
wherein the sheet-fed printing press has at least one main drive (19), in order to drive the transfer cylinders (15), the impression cylinders (14), the inking units (16), as well as preferably the dampening units of the printing units (10, 11, 12, 13) via a gear train (RZ), and
wherein a direct drive (20) is in each case assigned to the forme cylinder (17) of each printing unit (10, 11, 12, 13), in order to automatically drive the forme cylinders (17) of the printing units (10, 11, 12, 13), and
wherein a separate drive controller (22), which generates a control signal for the corresponding drive on the basis of a deviation between a nominal value and an actual value, is assigned to each drive,
in that a rotational oscillation compensation variable is generated online during the operation of the printing press for at least one drive controller (22) from at least one state variable of the drive control circuit, into which the respective drive controller (22) is integrated, which rotational oscillation compensation variable is used exclusively in this drive control circuit for the rotational oscillation compensation, **characterized in**
**that** the drive control circuits control drives as direct drives of the forme cylinders (17) of the printing units, that a rotational oscillation, which is to be compensated, of a respectively driven cylinder is detected from the or each state variable of the respective drive control circuit in the region of the gear train (RZ), which communicates with the forme cylinder (17), wherein the rotational oscillation compensation variable for the respective drive control circuit is generated from the detected rotational oscillation,
wherein bearer rings (26) are coupled in a torsionally rigid manner to each end of the forme cylinders (17) and transfer cylinders (15),
wherein each forme cylinder (17) is connected to elements performing oscillations via a transfer cylinder (15) cooperating with said forme cylinder, wherein the elements performing oscillations are coupled in a torsionally rigid manner to the gear train (RZ) and/or to the main drive (19, 19'), so that an oscillation damping is attained.

8. The method according to claim 7,
**characterized in that**, to generate the rotational oscillation compensation variable in the second mechanism (31), the measuring signal of the rotary encoder (24), which is assigned to the transfer cylinder (15), is captured and is evaluated with regard to the contained oscillation modes.

9. The method according to claim 7 or 8,
**characterized in that**, to generate the rotational oscillation compensation variable in the first mechanism (25), the measuring signal of the rotary encoder (23), which is assigned to the forme cylinder (17), is captured and is evaluated with regard to the contained oscillation modes.

10. The method according to one or several of claims 7 to 9,
**characterized in that** an active oscillation damping is carried out **in that** determined higher-frequency speed or position oscillations is not completely followed in the drive control circuit, wherein an additional compensation variable superimposing the position control is provided, and that the control ensures that specified limit torques are not exceeded.

## Revendications

1. Machine d'impression de feuilles comprenant plusieurs groupes d'impression (10,11,12,13), chaque groupe d'impression (10,11,12,13) présentant un cylindre porte-cliché (17), un cylindre de transfert (15) roulant sur le cylindre porte-cliché (17), un cylindre de contre-pression (14) roulant sur le cylindre de transfert (15), un groupe d'encrage (16) et de préférence un groupe de mouillage,
- la machine d'impression de feuilles présentant au moins une commande principale (19) pour entraîner grâce à un train de roues (RZ) les cylindres de transfert (15), les cylindres de contre-pression (14), les groupes d'encrage (16) et de préférence les groupes de mouillage des groupes d'impression (10,11,12,13), et
- étant associée au cylindre porte-cliché (17) de chaque groupe d'impression (10,11,12,13) respectivement une commande directe (20) pour entraîner les cylindres porte-cliché (17) des groupes d'impression (10,11,12,13) en motorisation autonome,
- étant associé à chaque commande directe (20) un régleur d'entraînement séparé (22) qui, sur la base d'un écart entre une valeur théorique et une valeur réelle, génère un signal de réglage pour la commande correspondante,
- étant associé aux régleurs d'entraînement (22) respectivement un dispositif qui génère en ligne, pendant le fonctionnement de la machine d'impression de feuilles, à partir d'au moins un paramètre d'état du circuit de réglage d'entraînement dans lequel le régleur d'entraînement respectif (22) est intégré, un paramètre de compensation d'oscillation rotative qui est valable exclusivement dans le circuit de réglage d'entraînement respectif pour la compensation d'oscillation rotative,
- étant prévu un premier moyen pour, à partir du ou de chaque paramètre d'état du circuit de réglage d'entraînement respectif, détecter une oscillation rotative à compenser du cylindre respectivement entraîné, et
- étant prévu un second moyen pour, à partir de l'oscillation rotative détectée, générer le paramètre de compensation d'oscillation rotative pour le circuit de réglage d'entraînement respectif,
- chaque régleur d'entraînement (22) étant en liaison avec des moyens de mesure de position de rotation (23, 24) qui sont associés à la zone d'engrènement de la commande directe (20) commandée au moyen du régleur d'entraînement (22) dans un groupe d'impression respectif (10,11,12,13),
**caractérisée en ce que**
- chaque régleur d'entraînement (22) est conçu pour recevoir des signaux pour l'identification d'oscillation dans le train de roues (RZ) de la machine d'impression de feuilles,
la commande directe (20) de chaque cylindre porte-cliché (17) étant, pendant le fonctionnement de la machine d'impression, connectée par contact roulant avec des éléments exécutant des oscillations,
les éléments exécutant des oscillations étant couplés de manière rigide en rotation au train de roues (RZ) et/ou à la commande principale (19, 19'),
la commande directe (20) de chaque cylindre porte-cliché (17) étant, pendant le fonctionnement de la machine d'impression, couplée par des bagues porteuses (26) couplées de manière rigide en rotation par contact roulant à des bagues porteuses (27) connectées de manière rigide en rotation au cylindre de transfert (15),
chaque cylindre porte-cliché (17) étant connecté par un cylindre de transfert (15) interagissant avec lui avec à des éléments exécutant des oscillations,
le couple d'amortissement se produisant avec un degré d'efficacité maximum possible et entraînant ainsi une réduction des oscillations dans le système d'entraînement de la machine d'impression.

2. Machine d'impression selon la revendication 1,
**caractérisée en ce que**
les premiers et seconds moyens d'un second dispositif (31) associé aux régleurs d'entraînement (22) qui est associé au cylindre de transfert (15) comprennent respectivement au moins une fonction, au moins un paramètre de ces fonctions étant adaptable au sens d'une adaptation en ligne pendant le fonctionnement de la machine d'impression, le second dispositif (31) étant couplé à un capteur de rotation (23) qui est associé au cylindre de transfert (15).

3. Machine d'impression selon une ou plusieurs des revendications 1 à 2,
**caractérisée en ce que** les premiers et seconds moyen du premier dispositif (25) associé au régleur d'entraînement (22) qui sont associés au cylindre porte-cliché (17) comprennent respectivement au moins une fonction, au moins un paramètre de ces fonctions étant adaptable au sens d'une adaptation en ligne pendant le fonctionnement de la machine d'impression, le second dispositif (31) étant couplé à un capteur de rotation (24) qui est associé au cylindre porte-cliché (17) .

4. Machine d'impression selon une ou plusieurs des revendications 1 à 3,
**caractérisée en ce qu'**à chaque régleur d'entraînement (22) d'une commande directe (20) est associé un second dispositif (31) de compensation d'oscillation rotative, le régleur d'entraînement (22) associé à une commande directe (20) générant, à partir de la valeur réelle du circuit de réglage d'entraînement correspondant, en particulier à partir d'une valeur réelle de positionnement du cylindre de transfert (15) entraîné par la commande principale, et à partir de la valeur théorique du circuit de réglage d'entraînement correspondant, en particulier à partir d'une valeur réelle de position du cylindre de transfert (15) roulant sur le cylindre porte-cliché (17), un signal de réglage pour la commande directe (20) du cylindre porte-cliché (17), et le second dispositif (31) de compensation d'oscillation rotative générant, à partir du ou de chaque paramètre d'état du circuit de réglage d'entraînement correspondant, en particulier à partir de la valeur réelle de position du cylindre de transfert (15), en ligne pendant le fonctionnement de la machine d'impression le paramètre de compensation d'oscillation rotative qui est valable exclusivement dans ce circuit de réglage d'entraînement pour la compensation d'oscillation rotative.

5. Machine d'impression selon une ou plusieurs des revendications 1 à 4,
**caractérisée en ce qu'**est associé à chaque régleur d'entraînement (22) d'une commande directe (20) un premier dispositif (25) de compensation d'oscillation rotative, le régleur d'entraînement (22) associé à une commande directe (20) générant, à partir de la valeur réelle du circuit de réglage d'entraînement correspondant, en particulier à partir d'une valeur réelle de position du cylindre porte-cliché entraîné (17), et à partir de la valeur théorique du circuit de réglage d'entraînement correspondant, en particulier à partir d'une valeur réelle de position du cylindre de transfert (15) roulant sur le cylindre porte-cliché (17), un signal de réglage pour la commande directe (20) du cylindre porte-cliché (17), et le premier dispositif (25) de compensation d'oscillation rotative générant, à partir du ou de chaque paramètre d'état du circuit de réglage d'entraînement correspondant, en particulier à partir de la valeur réelle de position du cylindre porte-cliché (17), en ligne pendant le fonctionnement de la machine d'impression le paramètre de compensation d'oscillation rotative qui est exclusivement valable dans ce circuit de réglage d'entraînement pour la compensation d'oscillation rotative.

6. Machine d'impression selon une ou plusieurs des revendications 1 à 5,
**caractérisée en ce que** chaque régleur d'entraînement (22) est un régleur en cascade composé d'un régulateur de courant, d'un régulateur de régime et d'un régulateur de position, le paramètre de compensation d'oscillation rotative généré pour le régleur d'entraînement respectif (22) étant utilisable pour la régulation de courant, la régulation de régime et la régulation de position.

7. Procédé d'exploitation d'une machine d'impression de feuilles comprenant plusieurs groupes d'impression (10,11,12,13), chaque groupe d'impression (10,11,12,13) présentant un cylindre porte-cliché (17), un cylindre de transfert (15) roulant sur le cylindre porte-cliché (17), un cylindre de contre-pression (14) roulant sur le cylindre de transfert (15), un groupe d'encrage (16) et de préférence un groupe de mouillage,
la machine d'impression de feuilles présentant au moins une commande principale (19) pour entraîner grâce à un train de roues (RZ) les cylindres de transfert (15), les cylindres de contre-pression (14), les groupes d'encrage (16) et de préférence les groupes de mouillage des groupes d'impression (10,11,12,13), et
- étant associée au cylindre porte-cliché (17) de chaque groupe d'impression (10,11,12,13) respectivement une commande directe (20) pour entraîner les cylindres porte-cliché (17) des groupes d'impression (10,11,12,13) en motorisation autonome,
- étant associé à chaque commande un régleur d'entraînement séparé (22) qui, sur la base d'un écart entre une valeur théorique et une valeur réelle, génère un signal de réglage pour la commande correspondante, par le fait qu'est généré en ligne, pendant le fonctionnement de la machine d'impression de feuilles, pour au moins un régleur d'entraînement (22), à partir d'au moins un paramètre d'état du circuit de réglage d'entraînement dans lequel le régleur d'entraînement respectif (22) est intégré, un paramètre de compensation d'oscillation rotative qui est valable exclusivement dans ce circuit de réglage d'entraînement respectif pour la compensation d'oscillation rotative,
**caractérisé en ce que**
les circuits de réglage d'entraînement assurent la commande en tant que commande directe des cylindres porte-cliché (17) des groupes d'impression, que, à partir du ou de chaque paramètre d'état du circuit de réglage d'entraînement respectif, une oscillation rotative à compenser d'un cylindre respectivement entraîné est détectée dans la zone en liaison avec le cylindre porte-cliché (17) du train de roues (RZ), étant généré, à partir de l'oscillation rotative détectée, le paramètre de compensation d'oscillation rotative pour le circuit de réglage d'entraînement respectif,
des bagues porteuses (26) étant couplées de manière rigide en rotation à chaque extrémité des cylindres porte-cliché (17) et des cylindres de transfert (15), chaque cylindre porte-cliché (17) étant connecté par un cylindre de transfert (15) interagissant avec lui avec des éléments exécutant des oscillations,
les éléments exécutant des oscillations étant couplés de manière rigide en rotation au train de roues (RZ) et/ou à la commande principale (19, 19'), de sorte qu'un amortissement des oscillations est obtenu.

8. Procédé selon la revendication 7,
**caractérisé en ce que**, pour générer le paramètre de compensation d'oscillation rotative dans le second dispositif (31), le signal de mesure du capteur de rotation (24) associé au cylindre de transfert (15) est détecté et évalué en ce qui concerne les formes d'oscillation contenues.

9. Procédé selon la revendication 7 ou 8,
**caractérisé en ce que**, pour générer le paramètre de compensation d'oscillation rotative dans le premier dispositif (25), le signal de mesure du capteur de rotation (23) associé au cylindre porte-cliché (17) est détecté et évalué en ce qui concerne les formes d'oscillation contenues.

10. Procédé selon une ou plusieurs des revendications 7 à 9,
**caractérisé en ce qu'**un amortissement actif des oscillations est réalisé du fait que des oscillations déterminées de régime ou de position à plus haute fréquence dans le circuit de réglage d'entraînement ne sont pas entièrement suivies, un paramètre de compensation supplémentaire se superposant à la régulation de position étant prévu, et que la régulation garantit que les couples de rotation limites prédéfinis ne soient pas dépassés.
